# EUROPEAN PATENT SPECIFICATION

(11) **EP 4 339 017 B1**
(45) Date of publication and mention of the grant of the patent: **07.05.2025**
(21) Application number: 23197611.9
(22) Date of filing: 15.09.2023
(51) Int. Cl.: B60P 1/44

(54) **TAILGATE LIFT FOR VEHICLES**
HUBLADEBÜHNE FÜR FAHRZEUGE
HAYON ÉLÉVATEUR POUR VÉHICULES

(30) Priority: 15.09.2022 IT 202200018957
(43) Date of publication of application: 20.03.2024
(73) Proprietor: Anteo S.p.A., 40062 Molinella (BO) (IT)
(72) Inventor: Maietti, Ilmer, 48015 Cervia (RA) (IT)
(74) Representative: GCA S.R.L.

(56) References cited:
- EP-A1- 1 020 324
- EP-A1- 1 541 412
- BE-A3- 1 017 465
- GB-A- 1 389 710

## Description

### Field of the invention

The present invention concerns a tailgate lift which can be associated to a vehicle such as, for example but without limitation to the generality, a truck, preferably having a mass between 3.5 and 8 tons. The present invention also relates to the vehicle comprising said tailgate lift.

### Background of the invention

In the field of goods transport vehicles, it is known to associate a tailgate lift comprising a mobile platform to the vehicle to facilitate operators in the loading and unloading of goods.

The tailgate lift is actuated by a plurality of hydraulic actuators that determine its movement between a vertical transport position and a tailgate position on the ground. Among the tailgate lifts known in the prior art, tailgates having an articulated parallelogram type structure are known. These tailgates provide for both an opening/closing rotation movement that brings the platform from the vertical transport position to a horizontal position in which the platform is at the height of the loading plane of the vehicle, and vice versa, and a lifting/lowering translational movement between this position and a horizontal tailgate position on the ground, during which the platform translates parallel to the ground.

These tailgates then provide for a ground connection movement, in which the platform passes from the horizontal position to an inclined position, and vice versa; in which in this inclined position the end edge furthest from the vehicle is in contact with the ground to allow operators to load/unload goods, for example through the use of pallet trucks. This movement, unlike the opening/closing rotation movement, must take place at a controlled desired speed, suitably limited, because the ground connection movement takes place when the platform must withstand a certain load, even of several tons.

Hydraulic actuators usually comprise a first pair of actuators and a second pair of actuators, one arranged on the right side and one on the left side of the chassis. Each pair of actuators comprises a rotation actuator, configured to determine said rotation movement of opening/closing of the platform, and a lifting actuator, configured to determine said translational movement of lifting/lowering.

The movement of the known tailgate lifts can be obtained by means of a control that can be electronic, mechanical or hydraulic.

Usually, when the vehicle to which the tailgate lift is to be connected is a truck having a mass of 3.5 to 8 tons, the hydraulic actuators are controlled by means of an electronic type control or by means of a mechanical type control.

In the case of electronic control, the driver of the vehicle is not able to carry out quick and simple repairs, but any failure of electronic components forces them to contact specialized centres equipped with the necessary tools to perform the control diagnostics and the necessary corrective actions to restore the operation of the tailgate. This leads both to the dissatisfaction of the driver of the vehicle, and to rather high maintenance times and costs, which also impose a period of inactivity on the vehicle.

A further shortcoming of electronic control is that it does not have adequate reliability. In fact, different electronic components can be subject to malfunctions, possibly caused by external environmental conditions, for example humidity, which can damage some components.

It is clear that incorrect operation of these components can have very serious consequences on the safety of operators and goods handled. For example, if a sensor communicates that the tailgate has reached the ground and therefore starts the ground connection movement even when in fact the tailgate is still far from the ground, it is clear that this could be dangerous for the operators and damaging to the goods being handled.

Another shortcoming of the electronic control is the fact that it necessitates further additional solutions, to determine the necessary slowing of the ground connection movement, for which it is necessary to introduce a complex valve system to reduce the flow of oil into/out of the rotation actuator.

The mechanical control of the movement of the actuators allows some shortcomings of the electronic control to be overcome, but has the shortcoming of including a plurality of levers and other mechanical members that can operate correctly only if the centre distances between the load-bearing members of the tailgate between the right side and the left side are fixed and connected to each other. In other words, the mechanical control can only be used if the tailgate is connected to the vehicle along its entire transverse length, which goes from the right side to the left side. There are some solutions in the art in which the tailgate is connected to the vehicle only in some localized points; solutions that are not compatible with the mechanical control of the actuators. EP 1 020 324 A1 discloses a tailgate lift similar to the preamble of claim 1.

### Purposes of the invention

One purpose of the present invention is to provide a tailgate lift for a vehicle whose maintenance is simple, fast and economical.

Another purpose of the invention is to provide a tailgate lift that is safe and reliable, capable of maintaining a safe condition in the event that a malfunction is detected, for example in the event of a breakage of a pipe, or a condition caused by the unbalancing of the load on the platform, so as to avoid damaging the goods to be handled and above all, to avoid injuring persons in the vicinity. Another purpose of the invention is to provide a control of the actuators that move the tailgate lift that is exclusively hydraulic.

According to one aspect of the invention, a tailgate lift for a vehicle is provided, in accordance with the features of claim 1.

### Brief description of the drawings

These and other aspects, characteristics and advantages of the present invention will become apparent from the following description of some embodiments of a lift device for a vehicle according to the invention, given as a non-restrictive example with reference to the attached drawings wherein:
- fig. 1 is a schematic axonometric view of a tailgate lift according to the present invention associated to a vehicle;
- figs. 2 to 4 are schematic side views of a lift device according to one embodiment of the present invention illustrating a possible operational sequence;
- fig. 5 is a hydraulic diagram of the tailgate lift according to the present invention;

### Detailed description of a preferred embodiment of the present invention.

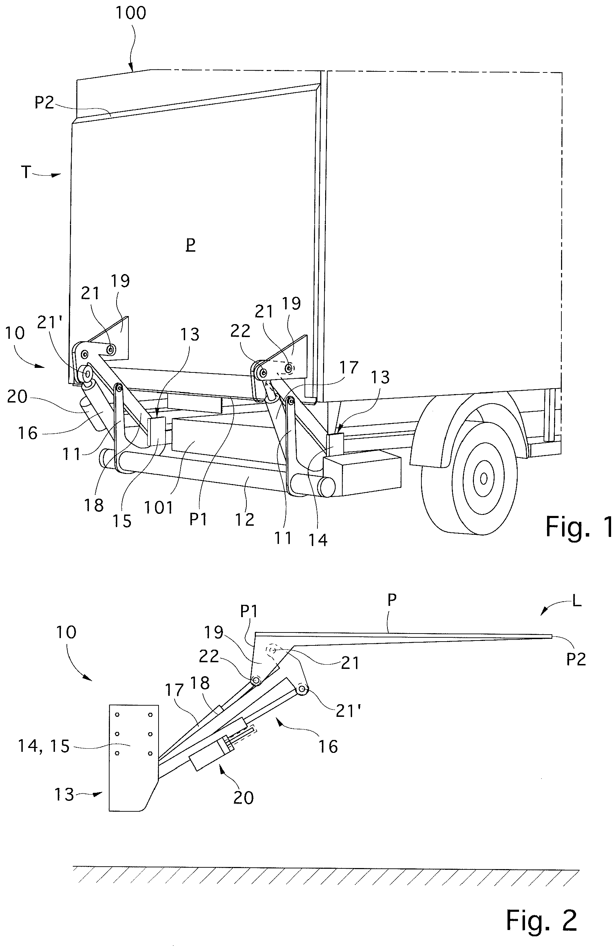

With reference to fig. 1, a tailgate lift 10 according to the present invention is configured to be associated to a vehicle 100, partially and schematically illustrated in the figure.

Preferably, the vehicle 100 is a truck of less than eight tons in size, preferably between 3.5 and 5 tons in size.

The tailgate 10 comprises a loading platform P configured to receive the goods to be loaded or unloaded onto/from the vehicle 100. The platform P defines a proximal end edge P1 and a distal end edge P2 with reference to a chassis 101 of the vehicle 100. In correspondence with the proximal end edge P1, the platform P comprises two ground rest elements 19, one arranged on the right side and one arranged on the left side of the vehicle 100.

The tailgate 10 also comprises two support members 11 configured to support a transverse bar 12, which acts as a bumper and is therefore configured to absorb the energy generated during a collision or an impact.

As will become clearer from the following detailed description, the transverse bar 12 also performs a structural support function for the tailgate 10.

The tailgate 10 comprises connection means 13 which connect it to the chassis 101 of the vehicle 100 by means of any known fastening member. These connection means 13 include suitable mechanical connection members, such as brackets, plates, crossbeams, which are fixed to the chassis 101 in any appropriate known manner, typically by bolting.

In the example illustrated, the connection means 13 comprise a right anchoring bracket 14 and a left anchoring bracket 15, respectively fixed to the right and left side of the chassis 101.

The right anchoring bracket 14 and the left anchoring bracket 15 are separate and spaced apart from each other, each being independently connected to the chassis 101.

The tailgate 10 also comprises a lifting actuator 16 and a rotation actuator 17, both connected to the connection means 13 at the respective end thereof.

Both the lifting 16 and rotation 17 actuators are hydraulic actuators wherein the operating fluid is an oil suitable for industrial uses.

In the example provided herein, the lifting actuator 16 is disposed on the left side of the vehicle 100, and is thus connected to the left anchoring bracket 15, while the rotation actuator 17 is disposed on the right side of the vehicle 100, and is thus connected to the right anchoring bracket 14.

Compared to the solutions known in the art, which comprise two pairs of actuators, one on the right and one on the left, each comprising both a lifting actuator and a rotation actuator, the tailgate 10 according to the present invention comprises only one pair of actuators, making it cheaper and lighter than the known solutions.

The tailgate 10 comprises a pair of arms 18, arranged with one on the right side and the other on the left side of the vehicle 100.

Each arm 18 is pivoted on the connection means 13 at a first end thereof. The arm 18 disposed on the right side is pivoted on the right anchoring bracket 14, while the arm 18 disposed on the left side is pivoted on the left anchoring bracket 15.

The platform P is pivoted on the pair of arms 18, in correspondence with their respective second ends, opposite said first ends.

In the example provided here, the platform P is pivoted on the arms 18 in correspondence with a first connection zone 21, defined in the ground rest elements 19.

It is noted that, for correctly moving the platform P, the lifting actuator 16 is connected, on the opposite side with respect to the left anchoring bracket 15, to the arm 18 in a correspondence with a further connection area 21', while the rotation actuator 17 is connected, on the opposite side with respect to the right anchoring bracket 14, to the platform P, in a second connection area 22, defined in correspondence with the ground rest elements 19.

Since the connection of the platform P to the chassis 101 of the vehicle 100 takes place through the pair of arms 18 in correspondence with the two different anchoring brackets 14 and 15, right and left, different and not connected to each other, and since only a lifting actuator 16 and a rotation actuator 17 are provided, arranged one on the right side and one on the left side of the vehicle, it is evident that the transverse bar 12 acts as a structural connection between the pair of arms 18 homogeneously transmitting the movement determined by the lifting actuator 16 between the two sides, right and left, of the vehicle 100. In this way the transverse bar 12 allows the torque that is generated to be transmitted from one side to the other of the vehicle 100.

In the example described here, the lifting actuator 16 is a single-acting cylinder while the rotation actuator 17 is a double-acting cylinder, as will also be clear from the following description of a possible example of a hydraulic circuit 30 for driving such actuators.

The tailgate 10 also comprises a compensation actuator 20, or auxiliary actuator for the ground connection of the platform P, the function of which will be described in detail below, within the scope of the description of the operation of the tailgate 10.

The compensation actuator 20 is in fluid communication with both the lifting actuator 16 (bottom side) and the rotation actuator 17 (rod side), as explained in detail below. In the example provided herein, the compensation actuator 20 is disposed on the left side of the vehicle 100, associated to the lifting actuator 16. In another version, not shown, the compensation actuator 20 can be arranged on the right side of the vehicle, being associated to the rotation actuator 17.

The fact that the compensation actuator 20 is directly associated to one of the lifting actuator 16 and the rotation actuator 17 avoids duplication of the flexible rubber ducts that transfer the oil under pressure between these actuators, reducing the risk of breakages, which can cause malfunctions of the tailgate 10.

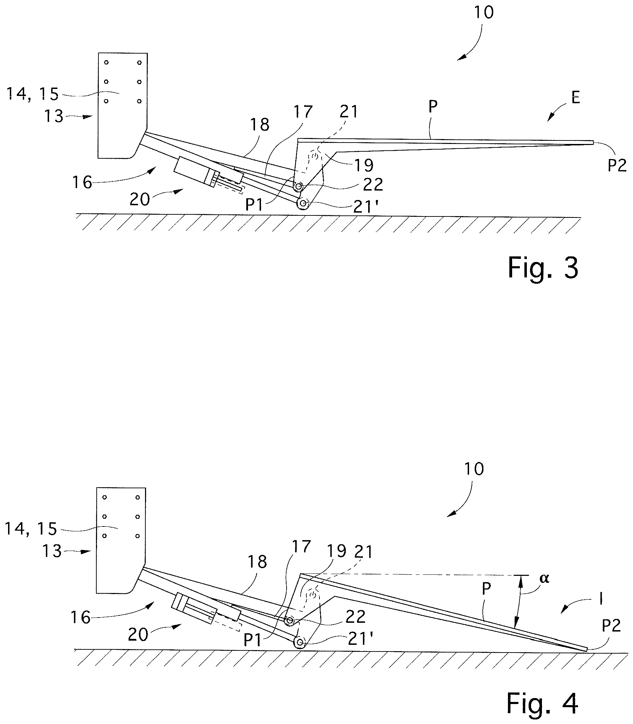

The platform P is movable between a closed transport position T, in which the platform 15 is arranged vertically (figs. 1 and 2), i.e. substantially perpendicular to the ground, to a position E of the tailgate with respect to the ground, in which it is arranged substantially horizontal (fig. 4) and close to the ground. In this position, the platform P rests on the ground only by means of the ground rest elements 19.

To pass from said closed transport position T to said position of the tailgate with respect the ground, the platform P transits in a position horizontal to the loading plane L (fig. 3), in which it is horizontal, and arranged substantially at the same height as the loading plane of the vehicle 100. When the platform P passes from said position L horizontal to the loading plane (fig. 3) to said position of the tailgate with respect to the ground E (fig. 4), it remains substantially horizontal, i.e. substantially parallel to the ground during said movement.

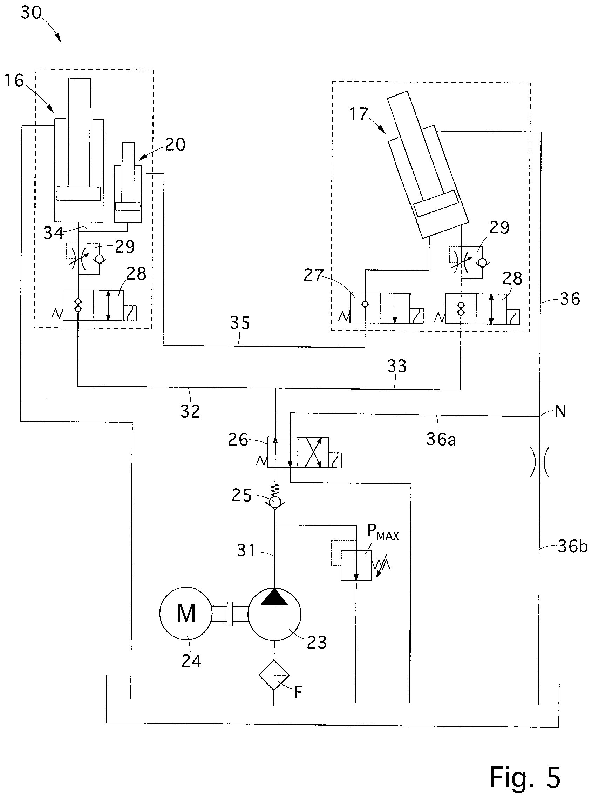

In order to be able to load and unload the goods from the platform P, the latter must be brought from said position of the tailgate with respect to the ground, to a position I of connection to the ground (fig. 5), in which the distal end P2 of the platform P is in contact with the ground so that the platform P is inclined by a certain angle α with respect to a horizontal plane.

With particular reference to the hydraulic diagram of fig. 5, a hydraulic actuation circuit 30 of the lifting, rotation and compensation actuators 16, 17, 20 will now be described. The tailgate 10 comprises a pump 23, driven in a known manner by a motor 24, a filter F and a plurality of valves, suitably located in the circuit 30, and described in detail below.

The circuit 30 comprises a delivery branch 31 on which a one-way valve 25 and a distributor valve 26 are arranged. In the example illustrated here, said distributor valve 26 is a four-way, two-position solenoid valve.

On this delivery branch 31 there is also a maximum pressure valve P_{MAX}, which is a safety valve that intervenes if the pressure on this branch reaches a predetermined maximum pressure, for example equal to 170 bar, in order to prevent dangerous malfunctions from occurring if this pressure is exceeded.

The delivery branch is divided into a first connection branch 32, which reaches the lifting actuator 16, in particular the bottom side chamber of the latter, and into a second connection branch 33, which reaches, instead, the lifting actuator 17, in particular the bottom side chamber of the latter.

Both on the first and on the second connection branch 32, 33 there are arranged in succession: a shutter solenoid valve 28, which alternatively allows or prevents the passage of oil, and a flow limiting valve 29, configured to control the flow rate of the oil, at least in a selected direction. The compensation actuator 20 is connected to the lifting actuator 16 via a third connection branch 34 and to the rotation actuator 17 via a fourth connection branch 35. It should be noted that in the illustrated example, in which the compensation actuator 20 is fixed to the lifting actuator 16, the third connection branch 34 can be represented by one or more rigid fittings, since the two cylinders are joined, while the fourth connection branch 35 can be a flexible pipe, for example made of rubber.

In particular, the third connection branch 34 connects the bottom side chamber of the compensation actuator 20 with the bottom side chamber of the lifting actuator 16, and the fourth connection branch 35 connects the rod side chamber of the compensation actuator 20 with the bottom side chamber of the rotating actuator 17.

An interception valve 27 is provided, configured to allow or prevent the passage of oil flow from the compensation actuator 20 to the rotation actuator 17, or vice versa. This interception valve 27 is integrated in the rotation actuator 17, in particular in its bottom, as indicated by the dashed box in the figure.

As schematized in fig. 5 with a dashed line box surrounding both the lifting actuator 16 and the rotation actuator 17, the shutter valves 28 and flow restrictor valves 29 are also integrated in these actuators, being for example integrated in the respective bottoms or in the respective side sleeves.

The interception valve 27 is disposed on the fourth connection branch 35. Such a position increases the safety of the circuit 30 since the interception valve 27 is controlled by a position sensor associated to the arm 18 set so as to keep it closed until it reaches the vicinity of the ground. In this way, even if there is a break or a leak in correspondence with the flexible pipe that defines the fourth connection branch 35, the platform P immediately touches the ground, but since it is already in its vicinity, this movement, although sudden and uncontrolled, does not cause damage to the goods handled and/or to the operator due to the short stroke.

In another embodiment, a further interception valve, similar to the valve 27, could also be provided on the third connection branch 34, if it was also configured as a flexible pipe. In the example provided here, such a further valve would however be superfluous since there is substantially a direct connection between the actuators 16 and 20.

The circuit 30 includes a further branch 36 that flows into the rod side chamber of the rotation actuator 17. In correspondence with a node N, the further branch 36 bifurcates into two forks: a first fork 36a which in a certain position of the valve 26 can be connected to the delivery branch 31 on which the pump 23 is arranged, and another fork 36b which reaches directly to the tank.

The following describe an operating cycle of the platform P via the circuit 30.

Initially the platform P is in the closed transport position T.

To rotate the platform P to the position L horizontal to the loading plane, the diverter valve 26 is energized to be brought to the position such that the oil, after traversing the delivery branch 31 and the first fork 36a of the further branch 36, reaches the rod-side chamber of the rotation actuator 17 so as to retract the rod and determine the opening of the platform P. At the same time, the shutter solenoid valve 28 arranged on the first communication branch 32 is kept closed, while the shutter solenoid valve 28 arranged on the second communication branch 33 is opened to allow the discharge of the oil from the bottom side of the rotation actuator 17.

When the platform P passes from the position L horizontal to the loading plane to the horizontal position E in which the tailgate is on the ground, the shutter solenoid valve 28 on the second connection branch 33 is closed, while that on the first connection branch 32 is opened to allow the oil to exit from the chamber on the bottom side of the lifting actuator 16. In this configuration, the diverter valve 26 remains energized to maintain the configuration described above.

The oil outlet from the bottom side chamber of the lifting actuator 16 is determined by the weight of the platform P and any load disposed thereon, which retracts the rod of the lifting actuator 16. The rate of descent is controlled by the calibration of the flow limiting valve 29 and descent ceases when the ground rest elements 19 reach the ground, at which time the pressure in the bottom side chamber of the lifting actuator 16 reaches zero.

The movement of the platform P between the horizontal position E in which the tailgate is on the ground and the position I of connection to the ground is obtained by the transfer of oil between the compensation actuator 20 and the rotation actuator 17 through the second communication branch 35. Whether the oil flow is from the compensation actuator 20 to the rotation actuator 17, or vice versa, is determined by the position of the valves 26, 27, 28 and of course by whether or not the pump 23 is actuated.

This system causes the same amount of oil necessary to reach the position I of connection to the ground to then return through the reverse path to allow the horizontal position E in which the tailgate is on the ground to be reached. The geometric dimensions of the compensation actuator 20, in particular the diameter of the rod and therefore the ratio between the useful thrust areas from the two opposite parts of the piston, are such as to manage the pressures so that it can operate correctly as described herein.

In particular, when the platform P moves from the horizontal position E in which the tailgate is on the ground the position I of connection to the ground, the diverter valve 27 is switched by the aforementioned position sensor to cause the oil from the bottom-side chamber of the rotation actuator 17 to pass to the rod-side chamber of the compensation actuator 20. In this configuration the shutter solenoid valve 28 on the first connection branch 32 is open while the shutter solenoid valve 28 on the second connection branch 33 is closed, and the diverter valve 26 is switched to remain in the position described above throughout the opening and lowering movement of the platform P.

Conversely, when the platform P is to be lifted and closed, it is first necessary to move the platform P from the position I of connection to the ground to the horizontal position E in which the tailgate is on the ground. To do this, the diverter valves 28 remain in the configuration just described, the pump 23 is activated, and the diverter valve 26 is in the rest position illustrated in fig. 5 to cause the pump 23 to send oil to the bottom side chambers of the lifting actuators 16 and compensation actuators 20. Since the circuit is designed so that the oil encounters fewer pressure drops to reach the latter, it will first enter the bottom side chamber of the compensation actuator 20 along the third connection branch 34. This causes oil to exit from the rod side chamber of the compensation actuator 20, which oil enters the bottom side chamber of the rotation actuator 17. This causes the rod of the latter to come out, which causes the platform P to reach the horizontal position E in which the tailgate is on the ground. Continuing to send oil, once the compensation actuator 20 has reached the end of its stroke, the rotation actuator remains stationary in the position it has reached, and the oil enters the chamber on the bottom side of the lifting actuator 19, thus starting the lifting of the platform P from the horizontal position E in which the tailgate is on the ground to the position L horizontal to the loading plane.

For the closing rotation movement of the platform P, the valve 26 remains in the configuration described above (i.e. that which can be seen in fig. 5), the shutter valve 28 on the second connection branch 33 is opened, while the shutter valve 28 on the first connection branch 32 is opened so that the oil reaches only the chamber on the bottom side of the rotation actuator 20, determining the exit of the respective rod.

It should be noted that all movements of the platform P are controlled by exclusively hydraulic actuators. This eliminates, or at least significantly reduces, the electrical or electronic components of the tailgate 10, increasing its reliability and reducing its complexity and cost.

It has been found in practice that the invention achieves the intended purposes.

In practice, the materials employed, as well as the shapes and the dimensions, may be any according to requirements without thereby departing from the scope of protection defined by the following claims.

## Claims

1. Tailgate lift (10) for a vehicle (100) comprising:
- a loading platform (P),
- a pair of support arms (18) which connect said platform (P) to a chassis (101) of said vehicle (100),
- means (16, 17) for moving said platform (P), comprising a lifting actuator (16) and a rotation actuator (17), which are configured to give said platform (P) a vertical translation movement, in which said platform (P) translates disposed horizontally, that is, parallel to the ground, and a rotation movement, respectively,
- a transverse bar (12) attached to said pair of support arms (18) by means of support members (11),
said tailgate (10) is **characterized in that** one support arm of said pair of support arms (18) and one of either said lifting actuator (16) or said rotation actuator (17) are connected to said chassis (101) in correspondence with a right anchoring bracket (14), while the other support arm of said pair of support arms (18) and the other of either said lifting actuator (16) or said rotation actuator (17) are connected to said chassis (101) in correspondence with a left anchoring bracket (15), which is separate and independent from said right anchoring bracket (14), wherein said transverse bar (12) structurally connects said pair of support arms (18), and **in that** it also comprises a compensation actuator (20) configured to move said platform (P) between a horizontal position (E) in which the tailgate is on the ground and a position (I) of connection to the ground, in which said platform (P) is inclined by a determinate angle (α) with respect to the horizontal plane.

2. Tailgate (10) as in claim 1, **characterized in that** said compensation actuator (20) is fluidically connected both to said lifting actuator (16) and also to said rotation actuator (17) by means of respective connection branches (34, 35).

3. Tailgate (10) as in claim 1 or 2, **characterized in that** said compensation actuator (20) is attached to one of either said lifting actuator (16) or said rotation actuator (17).

4. Tailgate (10) as in any claim hereinbefore, **characterized in that** each arm (18) of said pair is pivoted, in correspondence with its first ends, to said right anchoring bracket (14) and to said left anchoring bracket (15), respectively, and in correspondence with its respective second ends, opposite said first ends, to said platform (P).

5. Tailgate (10) as in any claim hereinbefore, **characterized in that** said platform (P) comprises at least two ground rest elements (19) configured to contact the ground when said platform (P) reaches said horizontal position (E) in which the tailgate is on the ground, one disposed on the right side and one disposed on the left side of said vehicle (100), and both disposed in proximity to a proximal end edge (P1) of said platform (P).

6. Tailgate (10) as in any claim hereinbefore, **characterized in that** said lifting actuator (16) is connected to said left anchoring bracket (15) and said rotation actuator (17) is connected to said right anchoring bracket (14).

7. Tailgate (10) as in claim 6, when dependent on claim 5, **characterized in that** said platform (P) is pivoted to said pair of arms (18) in correspondence with a first connection zone (21), **in that** said lifting actuator (16) is connected to said pair of arms (18) in correspondence with another connection zone (21'), and **in that** said rotation actuator (17) is connected to said platform (P) in a second connection zone (22), wherein said first and second connection zones (21, 22) are defined in correspondence with said ground rest elements (19).

8. Tailgate (10) as in any claim hereinbefore, **characterized in that** it comprises a flow limiting valve (29), configured to control the flow rate of the flow of oil, at least in one selected direction, wherein said flow limiting valve (29) is integrated both in said lifting actuator (16) and also in said rotation actuator (17).

9. Tailgate (10) as in any claim hereinbefore, **characterized in that** it comprises a shutter solenoid valve (28) integrated both in said lifting actuator (16) and also in said rotation actuator (17) in order to alternatively allow or prevent the solenoid valve of oil toward the respective actuator, and **in that** it also comprises an interception valve (27) configured to selectively allow the passage of oil flow from said compensation actuator (20) to said rotation actuator (17), or vice versa.

10. Vehicle (100), in particular a truck that has a mass of less than 8 tons, preferably comprised between about 3.5 and about 5 tons, **characterized in that** it comprises a tailgate lift (10) as in any claim hereinbefore.

## Patentansprüche

1. Hubladeklappe (10) für ein Fahrzeug (100), die aufweist:
- eine Ladeplattform (P),
- ein Paar Stützarme (18), die die Plattform (P) mit einer Karosserie (101) des Fahrzeugs (100) verbinden,
- Einrichtungen (16, 17) zum Bewegen der Plattform (P), die einen Hubaktuator (16) und einen Drehaktuator (17) aufweisen, die jeweils dazu gestaltet sind, der Plattform (P) eine vertikale Verschiebungsbewegung, bei der sich die Plattform (P) horizontal angeordnet, d. h. parallel zu dem Boden, verschiebt, und eine Drehbewegung zu vermitteln,
- eine Querschiene (12), die an dem Paar Stützarme (18) mittels Stützelementen (11) angebracht ist,
wobei die Ladeklappe (10) **dadurch gekennzeichnet ist, dass** ein Stützarm des Paars Stützarme (18) und einer von entweder dem Hubaktuator (16) oder dem Drehaktuator (17) mit der Karosserie (101) in Korrespondenz mit einem rechten Abspannbügel (14) verbunden sind, während der andere Stützarm des Paars Stützarme (18) und der andere von entweder dem Hubaktuator (16) oder dem Drehaktuator (17) mit der Karosserie (101) in Korrespondenz mit einem linken Abspannbügel (15) verbunden sind, der von dem rechten Abspannbügel (14) getrennt und unabhängig ist, wobei die Querschiene (12) das Paar Stützarme (18) strukturell verbindet, und dadurch, dass sie auch einen Ausgleichsaktuator (20) aufweist, der dazu gestaltet ist, die Plattform (P) zwischen einer horizontalen Position (E), bei der die Ladeklappe an dem Boden ist, und einer Position (I) einer Verbindung mit dem Boden zu bewegen, bei der die Plattform (P) um einen vorbestimmten Winkel (α) bezüglich der horizontalen Ebene geneigt ist.

2. Ladeklappe (10) wie in Anspruch 1, **dadurch gekennzeichnet, dass** der Ausgleichsaktuator (20) fluidisch sowohl mit dem Hubaktuator (16) als auch mit dem Drehaktuator (17) mittels jeweiliger Verbindungszweige (34, 35) verbunden ist.

3. Ladeklappe (10) wie in Anspruch 1 oder 2, **dadurch gekennzeichnet, dass** der Ausgleichsaktuator (20) an einem von entweder dem Hubaktuator (16) oder dem Drehaktuator (17) angebracht ist.

4. Ladeklappe (10) wie in einem der vorherigen Ansprüche, **dadurch gekennzeichnet, dass** jeder Arm (18) des Paars drehbar gelagert ist, in Korrespondenz mit seinen ersten Enden jeweils an dem rechten Abspannbügel (14) und an dem linken Abspannbügel (15) und in Korrespondenz mit seinen jeweiligen zweiten Enden, entgegengesetzt zu den ersten Enden, an der Plattform (P).

5. Ladeklappe (10) wie in einem der vorherigen Ansprüche, **dadurch gekennzeichnet, dass** die Plattform (P) mindestens zwei Bodenauflagebauteile (19) aufweist, die dazu gestaltet sind, den Boden zu berühren, wenn die Plattform (P) die horizontale Position (E) erreicht, bei der die Ladeklappe an dem Boden ist, eines an der rechten Seite angeordnet und eines an der linken Seite des Fahrzeugs (100) angeordnet und beide in der Nähe einer proximalen Endkante (P1) der Plattform (P) angeordnet.

6. Ladeklappe (10) wie in einem der vorherigen Ansprüche, **dadurch gekennzeichnet, dass** der Hubaktuator (16) mit dem linken Abspannbügel (15) verbunden ist und der Drehaktuator (17) mit dem rechten Abspannbügel (14) verbunden ist.

7. Ladeklappe (10) wie in Anspruch 6, wenn abhängig von Anspruch 5, **dadurch gekennzeichnet, dass** die Plattform (P) an dem Paar Arme (18) drehbar gelagert ist, in Korrespondenz mit einer ersten Verbindungszone (21), dadurch, dass der Hubaktuator (16) mit dem Paar Arme (18) in Korrespondenz mit einer anderen Verbindungszone (21') verbunden ist, und dadurch, dass der Drehaktuator (17) mit der Plattform (P) in einer zweiten Verbindungszone (22) verbunden ist, wobei die ersten und zweiten Verbindungszonen (21, 22) in Korrespondenz mit den Bodenauflagebauteilen (19) definiert sind.

8. Ladeklappe (10) wie in einem der vorherigen Ansprüche, **dadurch gekennzeichnet, dass** sie ein Strömungsbeschränkungsventil (29) aufweist, das dazu gestaltet ist, die Strömungsrate der Ölströmung mindestens in einer ausgewählten Richtung zu steuern, wobei das Strömungsbeschränkungsventil (29) sowohl in dem Hubaktuator (16) als auch in dem Drehaktuator (17) integriert ist.

9. Ladeklappe (10) wie in einem der vorherigen Ansprüche, **dadurch gekennzeichnet, dass** sie ein Absperrmagnetventil (28) aufweist, das sowohl in dem Hubaktuator (16) als auch in dem Drehaktuator (17) integriert ist, um abwechselnd das Magnetventil von Öl in Richtung des jeweiligen Aktuators zu ermöglichen oder zu verhindern, und dadurch, dass sie auch ein Unterbrechungsventil (27) aufweist, das dazu gestaltet ist, auswählbar den Durchgang einer Ölströmung von dem Ausgleichsaktuator (20) zu dem Drehaktuator (17) zu ermöglichen, oder umgekehrt.

10. Fahrzeug (100), insbesondere ein Lastkraftwagen, der eine Masse von weniger als 8 Tonnen hat, vorzugsweise zwischen etwa 3.5 und etwa 5 Tonnen, **dadurch gekennzeichnet, dass** es eine Hubladeklappe (10) wie in einem der vorherigen Ansprüche aufweist.

## Revendications

1. Hayon élévateur (10) pour un véhicule (100), comprenant :
- une plateforme de chargement (P),
- une paire de bras de support (18) qui relient ladite plateforme (P) à un châssis (101) dudit véhicule (100),
- des moyens (16, 17) pour déplacer ladite plateforme (P), comprenant un actionneur de levage (16) et un actionneur de rotation (17), qui sont configurés pour fournir à ladite plateforme (P) un mouvement de translation vertical, dans lequel ladite plateforme (P) se déplace en translation horizontalement, c'est-à-dire parallèlement au sol, et un mouvement de rotation, respectivement,
- une barre transversale (12) fixée à ladite paire de bras de support (18) au moyen d'éléments de support (11),
ledit hayon (10) est **caractérisé en ce qu'**un certain bras de support de ladite paire de bras de support (18) et un certain dudit actionneur de levage (16) ou dudit actionneur de rotation (17) sont connectés audit châssis (101) en correspondance avec un support d'ancrage droit (14), tandis que l'autre bras de support de ladite paire de bras de support (18) et l'autre dudit actionneur de levage (16) ou dudit actionneur de rotation (17) sont connectés audit châssis (101) en correspondance avec un support d'ancrage gauche (15), qui est séparé et indépendant dudit support d'ancrage droit (14), dans lequel ladite barre transversale (12) connecte structurellement ladite paire de bras de support (18), et **en ce qu'**il comprend également un actionneur de compensation (20) configuré pour déplacer ladite plateforme (P) entre une position horizontale (E) dans laquelle le hayon est sur le sol, et une position (I) de connexion au sol dans laquelle ladite plateforme (P) est inclinée d'un angle déterminé (α) par rapport au plan horizontal.

2. Hayon (10) selon la revendication 1, **caractérisé en ce que** ledit actionneur de compensation (20) est connecté de manière fluidique à la fois audit actionneur de levage (16) et également audit actionneur de rotation (17) au moyen de branches de connexion respectives (34, 35).

3. Hayon (10) selon la revendication 1 ou 2, **caractérisé en ce que** ledit actionneur de compensation (20) est fixé à un certain dudit actionneur de levage (16) ou dudit actionneur de rotation (17).

4. Hayon (10) selon l'une quelconque des revendications précédentes, **caractérisé en ce que** chaque bras (18) de ladite paire est pivoté, en correspondance avec ses premières extrémités, par rapport audit support d'ancrage droit (14) et audit support d'ancrage gauche (15), respectivement, et en correspondance avec ses secondes extrémités respectives, opposées auxdites premières extrémités, par rapport à ladite plateforme (P).

5. Hayon (10) selon l'une quelconque des revendications précédentes, **caractérisé en ce que** ladite plateforme (P) comprend au moins deux éléments d'appui au sol (19) configurés pour venir en contact avec le sol lorsque ladite plateforme (P) atteint ladite position horizontale (E) dans laquelle le hayon est sur le sol, l'un disposé sur le côté droit et l'autre disposé sur le côté gauche dudit véhicule (100), et tous deux disposés à proximité d'un bord d'extrémité proximal (P1) de ladite plateforme (P).

6. Hayon (10) selon l'une quelconque des revendications précédentes, **caractérisé en ce que** ledit actionneur de levage (16) est connecté audit support d'ancrage gauche (15) et ledit actionneur de rotation (17) est connecté audit support d'ancrage droit (14).

7. Hayon (10) selon la revendication 6, lorsqu'elle dépend de la revendication 5, **caractérisé en ce que** ladite plateforme (P) est pivotée vers ladite paire de bras (18) en correspondance avec une première zone de connexion (21), **en ce que** ledit actionneur de levage (16) est connecté à ladite paire de bras (18) en correspondance avec une autre zone de connexion (21'), et **en ce que** ledit actionneur de rotation (17) est connecté à ladite plateforme (P) dans une seconde zone de connexion (22), dans lequel lesdites première et seconde zones de connexion (21, 22) sont définies en correspondance avec lesdits éléments d'appui au sol (19).

8. Hayon (10) selon l'une quelconque des revendications précédentes, **caractérisé en ce qu'**il comprend une vanne de limitation d'écoulement (29), configurée pour commander le débit de l'écoulement d'huile, au moins dans une direction sélectionnée, dans lequel ladite vanne de limitation d'écoulement (29) est intégrée à la fois dans ledit actionneur de levage (16) et également dans ledit actionneur de rotation (17).

9. Hayon (10) selon l'une quelconque des revendications précédentes, **caractérisé en ce qu'**il comprend une électrovanne d'obturation (28) intégrée à la fois dans ledit actionneur de levage (16) et également dans ledit actionneur de rotation (17) afin de permettre ou d'empêcher alternativement l'électrovanne d'huile vers l'actionneur respectif, et **en ce qu'**il comprend également une vanne d'interception (27) configurée pour permettre sélectivement le passage de l'écoulement d'huile à partir dudit actionneur de compensation (20) vers ledit actionneur de rotation (17), ou vice versa.

10. Véhicule (100), en particulier un camion qui présente une masse inférieure à 8 tonnes, de préférence comprise entre environ 3.5 et environ 5 tonnes, **caractérisé en ce qu'**il comprend un hayon élévateur (10) selon l'une quelconque des revendications précédentes.
